# EUROPÄISCHE PATENTSCHRIFT

(11) **EP 2 841 992 B1**
(45) Veröffentlichungstag und Bekanntmachung des Hinweises auf die Patenterteilung: **07.06.2017**
(21) Anmeldenummer: 13707828.3
(22) Anmeldetag: 25.02.2013
(51) Int. Cl.: G06F 3/033, G03B 21/14, G03B 21/20, G03B 5/00, H04N 9/31

(54) **VERFAHREN ZUM REDUZIEREN EINER LICHTSTÄRKE EINER PROJEKTIONSVORRICHTUNG**
METHOD OF REDUCING THE LIGHTING INSTENSITY OF A PROJECTION DEVICE
PROCÉDÉ POUR RÉDUIRE L'INTENSITÉ DE LUMIÈRE D'UN DISPOSITIF DE PROJECTION

(30) Priorität: 25.04.2012 DE 102012206795
(43) Veröffentlichungstag der Anmeldung: 04.03.2015
(73) Patentinhaber: Robert Bosch GmbH, 70442 Stuttgart (DE)
(72) Erfinder: LIU, Ming, 72762 Reutlingen (DE); SLOGSNAT, David, 72074 Tuebingen (DE); FISCHER, Frank, 72810 Gomaringen (DE); KREYE, Daniel, 72770 Reutlingen (DE); PILARD, Gael, 72127 Wankheim (DE)
(86) Internationale Anmeldenummer: PCT/EP2013/053690
(87) Internationale Veröffentlichungsnummer: WO 2013/159950

(56) Entgegenhaltungen:
- WO-A1-2011/012168
- JP-A- 2009 288 498
- US-A1- 2001 005 262
- US-A1- 2010 243 858
- US-B1- 6 460 999
- Anonymous: "Lidar - Wikipedia, the free encyclopedia", , 24 April 2012 (2012-04-24), XP055256519, Retrieved from the Internet: URL:https://en.wikipedia.org/w/index.php?t itle=Lidar&oldid=489054266 [retrieved on 2016-03-09]

## Beschreibung

Die vorliegende Erfindung betrifft ein Verfahren zum Reduzieren einer Lichtstärke einer Projektionsvorrichtung, insbesondere zum Reduzieren eines Gefährdungspotenzials eines Betrachters beim Betreiben einer Projektionsvorrichtung, insbesondere einer mobilen Projektionsvorrichtung.

### Stand der Technik

Aus dem Stand der Technik sind so genannte Pico-Projektionsvorrichtungen oder kurz-Projektoren oder auch -Beamer bekannt, welche in etwa die Größe einer Zigarettenschachtel aufweisen, und dazu dienen, beispielsweise bei Anschluss an einen Laptop-Computer oder auch als integraler Bestandteil einer elektronischen Einrichtung, wie zum Beispiel einem Smartphone, den Bildschirminhalt des Computers, oder allgemein Information, auf eine Wandfläche zu projizieren.

Herkömmliche Projektoren dieser Art arbeiten nach dem DLP- (digital light processor) Prinzip, dem LCoS- (liquid crystal on silicon) Prinzip oder auch als Scanning Mirror Laser Projektor. Auf die genaue Funktionsweise dieser Projektoren soll hier jedoch nicht näher eingegangen werden.

Die herkömmlichen Projektoren haben gemeinsam, dass die projizierte visuelle Darstellung der Information mit im Wesentlichen homogener Ausleuchtung auf eine Projektionsfläche erfolgt. Dies hat zum einen den Nachteil, dass die zur Verfügung stehende Energie des Projektors gleichmäßig auf alle Teilflächen der Projektionsfläche verteilt wird, obwohl oftmals nur eine oder wenige Teilflächen für einen Betrachter relevant ist bzw. sind. Das heißt, dass für nicht relevante Teilflächen unnötig Energie in Form von beispielsweise Lichtstärke bzw. Energie des Projektors verbraucht wird und somit die zeitliche Anwendbarkeit des Projektors, welcher in der Regel unabhängig vom Stromnetz, d.h. beispielsweise mit Akkus, betrieben wird, relativ stark reduziert wird.

Zum anderen ergibt sich aufgrund der homogenen Ausleuchtung der Projektionsfläche der Nachteil, dass die Leuchtdichte der projizierten Darstellung insgesamt unter Umständen aus Energiespar-Gründen relativ niedrig gehalten wird, so dass sich für den Betrachter nur eine unbefriedigende Darstellung ergibt.

Oftmals ist nur eine Teilfläche der Projektionsfläche, d.h. etwa 10% bis 50% der Gesamtfläche, für den Betrachter inhaltlich relevant, zumindest für eine gewisse Zeitdauer, wie z.B. bei Videoclips, Fotobrowsern, aktuell bearbeiteten Bereichen eines Anwendungsfensters bei Textdokumenten, Tabellen oder Zeichenprogrammen. In diesem Zusammenhang sollen großformatige Video- bzw. Bildvorführungen, welche die gesamte Projektionsfläche ausnutzen und mit netzabhängigen Geräten durchgeführt werden, im Gegensatz zu hier diskutierten mobilen Anwendungen nicht betrachtet werden.

Bei Laser-basierten Geräten ist zudem der vom Projektor ausgehende Lichtstrom aufgrund bestehender Augensicherheitsrichtlinien auf Werte begrenzt, die bei einer ganzflächigen homogen verteilten Darstellung ebenfalls nur eine unbefriedigende Leuchtdichte der projizierten Darstellung erzielen lassen. Der Betrieb von Projektionsvorrichtungen, welche Laserlicht mit relativ hoher Leistung verwenden, wird als nachteilig empfunden, da solches Laserlicht beim Auftreffen auf einen menschlichen Körper, insbesondere Augen, gesundheitsschädlich sein kann.

In der JP 2009 288498 A ist ein Projektor beschrieben, welcher einen Sensor zum Detektieren von menschlichen Körpern aufweist, welcher auf derselben Oberfläche wie eine Projektionslinse des Projektors installiert ist. Der Projektor weist außerdem Mittel zum Einstellen einer Entfernung sowie eine Leuchtkraft-Steuereinrichtung des Projektors auf. Die Leuchtkraft-Steuereinrichtung ist dazu ausgebildet, die Leuchtkraft des Projektors zu verringern wenn der Sensor einen menschlichen Körper in einer Entfernung erfasst, welche geringer ist als die eingestellte Entfernung.

In der US 2001/005262 A1 ist ein Verfahren zum Projizieren von Laserstrahlen auf einen Schirm zum Darstellen eines Bildes beschrieben, wobei eine Messwelle zusammen mit den Laserstrahlen auf den Schirm projiziert wird. Die Messwelle, welche von dem Schirm zurückgeworfen wird, wird detektiert, um ein Hindernis, welches in die Projektionsfläche der Laserstrahlen eindringt, zu erfassen. Wird das Eindringen des Hindernisses in die Projektionsfläche erfasst, werden die Laserstrahlen abgeschaltet.

In der US 2010/243858 A1 ist ein Lasersystem für eine lasergenerierte Windschutzscheibenanzeige beschrieben. Ein Laserstrahl wird zunächst in Richtung eines reflektierenden Ziels außerhalb der Anzeigefläche der Windschutzscheibe gelenkt. Ein Sensor in dem Lichtpfad des Laserstrahls wird ausgewertet, um ein Rückkopplungssignal zu erzeugen, falls der Laserstrahl auf den Sensor auftrifft. Wird das Rückkopplungssignal erfasst, wird der Laserstrahl auf die Anzeigefläche gelenkt, um eine Fahreranzeige zu erzeugen. Wird das Rückkopplungssignal nicht erfasst, wird der Laser automatisch ausgeschaltet.

In der US 6 460 999 B1 sind ein Projektor zum Projizieren eines Bildes auf einen Schirm und eine Schutzvorrichtung für den Projektor beschrieben. Der Projektor umfasst Sensoren zum Erfassen von Objekten in einer zu überwachenden Fläche außerhalb und entlang einer Projektionsfläche des Projektors. Erfassen die Sensoren ein Objekt in der zu erfassenden Fläche, wird der Projektor gesteuert, das Projizieren zu unterbrechen.

In der WO 2011/012168 A1 sind ein optisches Mikro-Projektionssystem und ein Projektionsverfahren beschrieben.

### Offenbarung der Erfindung

Die Erfindung schlägt deshalb unter einem ersten Aspekt ein Verfahren zum Reduzieren einer Lichtstärke einer Projektionsvorrichtung mit den Merkmalen des Patentanspruchs 1 vor.

Unter einem zweiten Aspekt schlägt die Erfindung eine Projektionsvorrichtung mit den Merkmalen des Patentanspruchs 2 vor.

### Vorteile der Erfindung

Der Vorteil des Verfahrens bzw. der Projektionsvorrichtung gemäß einer Ausführungsform ergibt sich daraus, dass eine Lichtstärke einer zum Beispiel Laser-betriebenen Projektionsvorrichtung in dem Fall reduziert wird, wenn sich im Strahlengang der Projektion, oder kurz dem Projektionsweg, ein Objekt befindet, beispielsweise ein Teil eines menschlichen Körpers, für den die von der Projektionsvorrichtung ausgehende Strahlung gesundheitsgefährdend sein könnte.

Dies ist insbesondere von Vorteil, wenn die Lichtstärke für wenigstens eine für den Betrachter relevante Teilfläche erhöht wird, so dass auch das Gefährdungspotenzial entsprechend erhöht würde. Durch das Aussenden von Test-artigen elektromagnetischen Signalen wird jedoch die Anwesenheit eines Objektes im Projektionsweg detektiert, und das Gefährdungspotenzial, d.h. die Lichtstärke für die wenigstens eine relevante Teilfläche, entsprechend reduziert, solange sich das Objekt im Projektionsweg befindet.

Vorzugsweise werden die elektromagnetischen Signale entlang von Rändern der wenigstens einen relevanten, d.h. optisch hervorgehobenen, Teilfläche ausgesendet, was den Vorteil hat, dass die Signale, bei denen es sich um Lichtsignale handelt, vom Betrachter nicht bemerkt werden.

Die Lichtsignale werden pulsförmig mit einer Pulslänge im Bereich von 0,2 ns bis 100 ns ausgesendet, insbesondere zwischen mindestens 20 und höchstens 100 Pulsen mit einer Frequenz von 100 MHz bis 500 MHz und einer Länge von 0,2 ns bis 10 ns.

Vorteilhafterweise umfasst der Schritt des Veränderns des Bilddarstellungsverhältnisses ein Verändern eines Lichtstärkeverhältnisses und/oder Leuchtdichteverhältnisses und/oder eines Kontrastverhältnisses und/oder eines Farbdichteverhältnisses und/oder eines Grauwertverhältnisses und/oder eines Bildschärfeverhältnisses. Somit kann, wenn eine Teilfläche als relevant ausgewählt worden ist, über das Leuchtdichteverhältnis von relevanter Teilfläche zu der restlichen Fläche die relevante Teilfläche bzw. Information relativ heller als der Rest dargestellt werden, wobei die Lichtstärke bezogen auf die relevante Teilfläche nicht notwendigerweise erhöht werden muss, sondern konstant bleiben kann, und lediglich die Lichtstärke bezogen auf die nicht-relevanten Flächen abgesenkt werden kann.

Eine optische Hervorhebung einer relevanten Teilfläche kann auch durch Verändern eines Kontrastverhältnisses zwischen relevanten und nicht-relevanten Flächen erzielt werden, ebenso wie durch Verändern eines Farbdichteverhältnisses und/oder eines Grauwertverhältnisses und/oder eines Bildschärfeverhältnisses.

Es wird weiterhin bevorzugt, dass der Schritt des Auswählens ein Auswählen der relevanten Teilfläche mit einer Zeige-Einrichtung umfasst. Eine Zeige-Einrichtung kann z.B. ein - von der Projektionsvorrichtung separater - Laserpointer sein, mit dem auf der Projektionsfläche auf eine relevante Teilfläche gezeigt wird, welche dann optisch relativ zu den restlichen Flächen hervorgehoben wird.

Weiterhin wird bevorzugt, dass der Schritt des Auswählens der relevanten Teilfläche eine mit der Projektionsvorrichtung und/oder mit einer mit der Projektionsvorrichtung in steuerbarer Weise verbundenen elektronischen Einrichtung gekoppelten Zeige-Einrichtung umfasst. Dies kann beispielsweise ein Mauszeiger sein, welcher entweder direkt mit der Projektionsvorrichtung gekoppelt ist, oder welcher über eine mit der Projektionsvorrichtung verbundene elektronische Einrichtung, z.B. einen externen Rechner, mit der Projektionsvorrichtung gekoppelt ist. Im ersten Fall kann die Projektionsvorrichtung beispielsweise auch in ein Smartphone, Tablet-PC, Note- oder Ultra-Book oder sonstige computer-basierte Einrichtung direkt integriert sein, wobei die Zeige-Einrichtung auch ein berührungsempfindlicher Bildschirm (Touch Screen) sein kann.

Vorzugsweise umfasst der Schritt des Auswählens ein Auswählen der relevanten Teilfläche in manueller Weise, wobei das Auswählen durch kurzzeitiges Berühren der relevanten Teilfläche mit der Hand oder einem anderen Gegenstand erfolgt, und zwar auf der visuell dargestellten Projektion und/oder durch Eingreifen in einen Projektionsweg der Projektion. Somit kann auf relativ einfache Weise eine relevante Teilfläche ausgewählt werden.

Vorzugsweise bleibt eine Position der projizierten visuellen Darstellung relativ zur Gesamtfläche bei einer Bewegung der Projektionsvorrichtung konstant. Dies ist insbesondere bei Projektionsvorrichtungen von Vorteil, die in der Hand eines Nutzers gehalten werden, um unvermeidliche Bewegungsschwankungen zu kompensieren. Eine Bewegung der Projektionsvorrichtung kann mittels eines oder mehrerer Sensoren ermittelt werden, insbesondere durch Beschleunigungssensoren, Drehratensensoren, Magnetfeldsensoren, Optik-Sensoren, Abstandssensoren und/oder Infrarotsensoren.

Im Hinblick auf Sensoren sei noch bemerkt, dass die Projektionsvorrichtung auch einen oder mehrere Sensoren zur Bestimmung einer Umgebungshelligkeit umfassen kann, um so Werte für beispielsweise Lichtstärke und/oder Lichtstrom an die Umgebungshelligkeit anzupassen.

Es wird auch bevorzugt, dass die Projektionsvorrichtung mit einer Zeige-Einrichtung zum Auswählen der relevanten Teilfläche gekoppelt ist, wobei eine visuelle Darstellung der Zeige-Einrichtung auf die relevante Teilfläche projiziert wird, und wobei bei einer Bewegung der Projektionsvorrichtung, im Gegensatz zu relativ kleinen Bewegungsschwankungen, die Position der projizierten Darstellung der Zeige-Einrichtung relativ zur relevanten Teilfläche konstant bleibt oder die Position der projizierten Darstellung der Zeige-Einrichtung mit der Bewegung der Projektionsvorrichtung veränderbar ist, um so eine andere Teilfläche mit der Zeige-Einrichtung als relevant auszuwählen.

Es wird außerdem bevorzugt, dass ein Nutzer optional eine Teilfläche mittels der Zeige-Einrichtung als relevant auswählen kann. Hierbei kann der Nutzer beispielsweise "per Mausklick" oder auch auf andere durch den Nutzer steuerbare Weise entscheiden, ob eine Teilfläche optisch hervorgehoben werden soll oder nicht.

Weiterhin wird noch bevorzugt, dass die Projektionsvorrichtung beim Projizieren von Information in Form der visuellen Darstellung auf die Gesamtfläche im Wesentlichen regelmäßig über die Gesamtfläche verteilt und projiziert angeordnete Steuersignale aussendet, welche bei Beeinflussung durch den Schritt des Auswählens eine den entsprechenden Steuersignalen zugeordnete Teilfläche als optisch hervorgehoben bzw. relevant erscheinen lässt. Auf diese Weise "weiß" die Projektionsvorrichtung nach der Art einer Rückkopplung, wie es beispielsweise bei einer Abstandsmessvorrichtung auf Grundlage von Infrarot- oder Ultraschall-Signalen der Fall ist, welche Teilfläche aktuell als relevant ausgewählt wird.

### Kurze Beschreibung der Zeichnungen

Nachfolgend wird die Erfindung anhand von Beispielen in Verbindung mit den Figuren erläutert, wobei:
- Figur 1: eine beispielhafte Projektionsvorrichtung mit einer von der Projektionsvorrichtung ausgestrahlten Projektionsfläche mit verschiedenen Informationen zeigt;
- Figur 2: eine beispielhafte Projektionsvorrichtung mit einer von der Projektionsvorrichtung ausgestrahlten Projektionsfläche mit verschiedenen Informationen zeigt, wobei eine Information optisch hervorgehoben ist;
- Figur 3: eine beispielhafte Projektionsvorrichtung mit einer von der Projektionsvorrichtung ausgestrahlten Projektionsfläche mit verschiedenen Informationen zeigt, wobei eine Information optisch hervorgehoben ist, während die Projektionsvorrichtung eine Bewegung ausführt;
- Figur 4: eine beispielhafte Projektionsvorrichtung mit einer von der Projektionsvorrichtung ausgestrahlten Projektionsfläche mit verschiedenen Informationen zeigt, wobei eine Information optisch hervorgehoben ist, während die Projektionsvorrichtung eine Bewegung über einen Rand der Projektionsfläche ausführt; und
- Figur 5: eine Projektionsfläche mit darauf dargestellten möglichen Signalen in Form von punktierten Linien zum Detektieren von im Projektionsweg befindlichen Objekten.

### Beschreibung der Erfindung

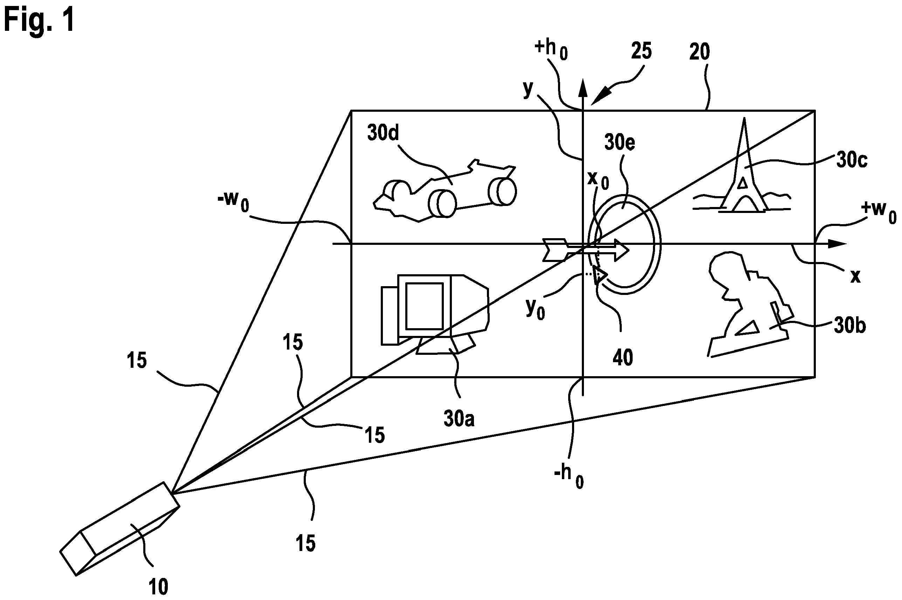

Figur 1 zeigt schematisch eine Projektionsvorrichtung 10, welche für eine Anwendung des erfindungsgemäßen Verfahrens, welches im Folgenden detailliert erläutert wird, geeignet ist.

Die Projektionsvorrichtung 10 ist im dargestellten Beispiel in Figur 1 ein sogenannter Pico-Projektor oder -Beamer, welcher als stand-alone-Vorrichtung gezeigt ist und in etwa die Größe einer Zigarettenschachtel aufweist. Es ist jedoch auch denkbar, dass die Projektionsvorrichtung 10 integraler Bestandteil eines (hier nicht dargestellten) Smartphones, Tablet-PCs, Note- oder Ultra-Books, Camcorders, Gameconsole, mobilen Bildübertragungsgeräts (z.B. DVD-Player) oder einer sonstigen, insbesondere auch computer-basierten und/oder internetfähigen, mobilen oder auch automobilen Einrichtung ist.

Weiterhin ist in Figur 1 eine Projektionsfläche 20 dargestellt, welche als Gesamtfläche bezeichnet werden soll, und welche sich ergibt, wenn die Projektionsvorrichtung 10 Information auf einen nicht näher spezifizierten Untergrund projiziert bzw. visuell darstellt. Zur besseren Kenntlichmachung sind in Figur 1 vier Lichtstrahlenwege 15 dargestellt, welche zu den Ecken der Projektionsfläche 20 verlaufen.

In der Projektionsfläche 20 ist zum Zwecke der weiteren Erläuterung (d.h. sonst nicht sichtbares) Koordinatensystem 25 eingetragen, bestehend aus einer mit X bezeichneten Achse und einer mit Y bezeichneten Achse. Somit lässt sich die Ausdehnung der Projektionsfläche 20 mit -w₀ bis +w₀ in der Breite, und +h₀ bis -h₀ in der Höhe angeben.

Auf der Projektionsfläche 20 sind verschiedene beliebige Inhalte 30a, 30b, 30c, 30d, 30e dargestellt, die im dargestellten Beispiel Icons sind, aber auch Anwendungsfenster, Bedienelemente usw. sein können.

Weiterhin ist auf der Projektionsfläche 20 eine als Pfeilspitze dargestellte Zeiger-Einrichtung 40 dargestellt, welches relativ zu der Projektionsfläche 20 eine feste Position aufweist, nämlich - bezogen auf das Koordinatensystem 25 - eine mit x₀ und y₀ bezeichnete Position. Es wird jedoch bevorzugt, dass sich die Zeige-Einrichtung 40 in der Mitte der Projektionsfläche 20 befindet.

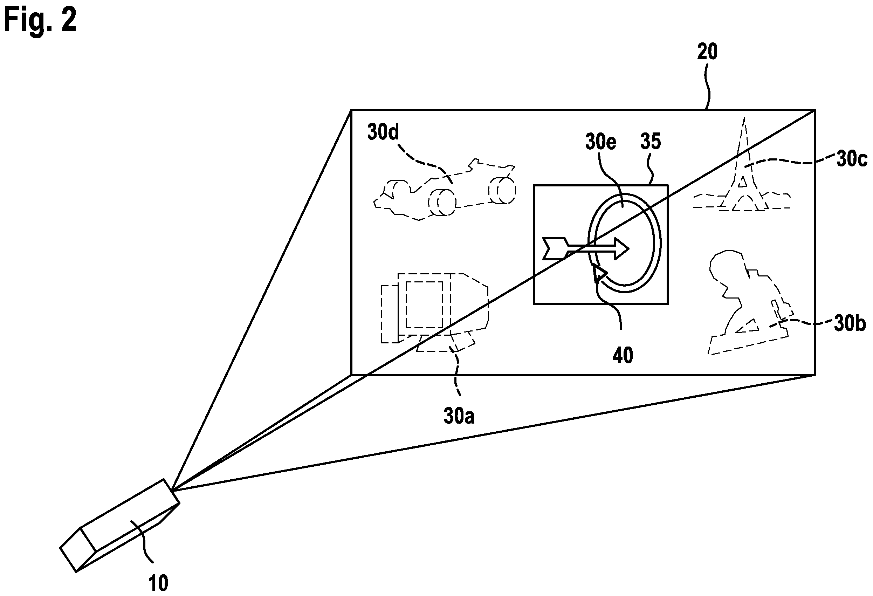

Figur 2 zeigt im Wesentlichen die gleiche Darstellung wie in Figur 1, d.h. eine Projektionsvorrichtung 10 sowie eine Projektionsfläche 20 mit darin dargestellten Icons 30a, 30b, 30c, 30d, 30e sowie einer Zeige-Einrichtung 40. Der Unterschied zur Figur 1 besteht nun darin, dass das Icon 30e aufgrund der im Wesentlichen auf dem Icon 30e dargestellten Zeige-Einrichtung 40 als für den Betrachter relevant ausgewählt ist. Das heißt, dass die übrigen Icons 30a, 30b, 30d, 30c für den Betrachter nicht relevant sind, und deshalb in der Figur 2 nur gestrichelt angedeutet sind.

In der Praxis bedeutet dies, dass das Icon 30e, welches auch, wie oben bereits erwähnt, ein Anwendungsfenster, eine Textstelle, eine Tabelle, ein Videoclip usw. sein kann, als gegenüber den übrigen Icons 30a, 30b, 30d, 30c als optisch hervorgehoben erscheint, da es für den Betrachter relevant ist. Die optische Hervorhebung erfolgt durch ein Verändern des Bilddarstellungsverhältnisses des in der Figur 2 mit einem Rahmen 35 umgebenen, und somit eine Teilfläche bildenden, Icons 30e gegenüber den übrigen Icons 30a, 30b, 30d, 30c mittels einer Veränderung des Leuchtdichteverhältnisses dieser Teilfläche gegenüber der restlichen Fläche. Dabei kann entweder die Leuchtdichte der relevanten Teilfläche gleichbleiben und die Leuchtdichte der restlichen - nicht-relevanten Fläche-wird abgesenkt oder die Leuchtdichte der relevanten Teilfläche wird, über eine Erhöhung der Lichtstärke für diese Teilfläche, erhöht, während die Leuchtdichte der restlichen Fläche gleichbleibt.

Das optische Hervorheben kann auch über eine Änderung eines Kontrastverhältnisses und/oder eines Farbdichteverhältnisses und/oder eines Grauwertverhältnisses und/oder eines Bildschärfeverhältnisses erfolgen.

Weiterhin sei bemerkt, dass ein Auswählen einer relevanten Teilfläche auch mit anderen Mitteln erfolgen kann, welche oben bereits erwähnt sind.

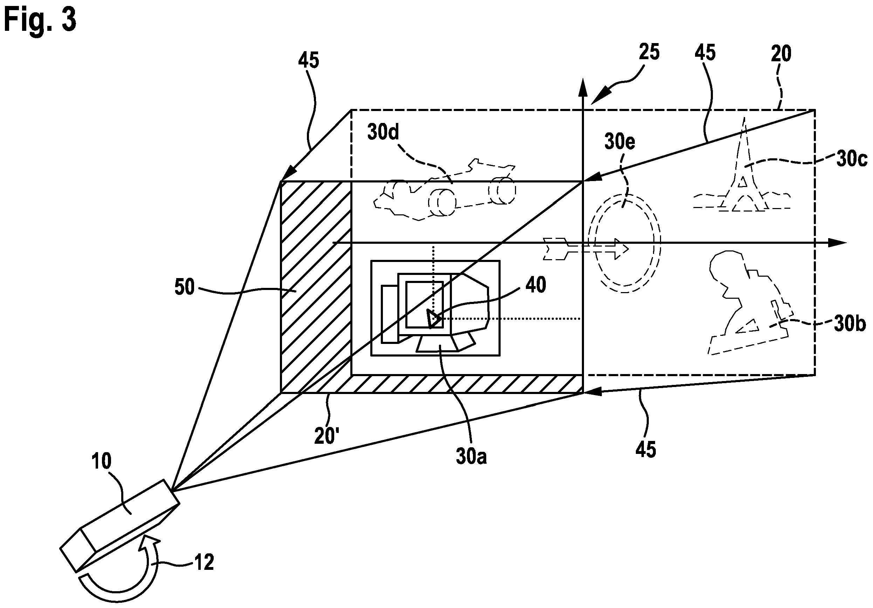

Figur 3 zeigt wiederum eine im Wesentlichen gleiche Darstellung wie die Figuren 1 und 2, jedoch mit dem Unterschied, dass die tatsächliche Projektionsfläche 20' durch ein Verlagern bzw. Bewegen der Projektionsvorrichtung 10, angedeutet durch einen halbkreisförmigen Pfeil 12, relativ zur ursprünglichen Projektionsfläche 20 (gestrichelt dargestellt) verschoben ist. Diese Verschiebung der Projektionsfläche von 20 auf 20' wird durch Pfeile 45 angedeutet.

Da sich mit der Verlagerung der Projektionsvorrichtung 10 auch die Zeige-Einrichtung 40 mitbewegt hat, ist nun das Icon 30a als für den Betrachter relevant ausgewählt bzw. markiert. Aus diesem Grund sind die übrigen Icons 30b, 30c, 30d, 30e nur gestrichelt angedeutet. Die gestrichelt dargestellte Fläche 50, für die keine Bildinformation zur Verfügung steht, kann komplett dunkel bleiben, oder auch jede andere Farbe, Helligkeit, Muster zugewiesen bekommen. Bei Bewegung der Projektionsvorrichtung 10 kann, wie oben bereits erwähnt, durch verschiedene Sensoren erfasst werden.

Obwohl sich im in Figur 3 dargestellten Beispiel die Zeige-Einrichtung 40 mit der Projektionsvorrichtung 10 mitbewegt, d.h. die Position der Zeige-Einrichtung 40 relativ zu den Rändern der Projektionsfläche 20' konstant bleibt, ist es auch denkbar, dass sich die Zeige-Einrichtung 40 bewegt, um ein Icon als relevant auszuwählen, während sich die Projektionsfläche nicht verlagert.

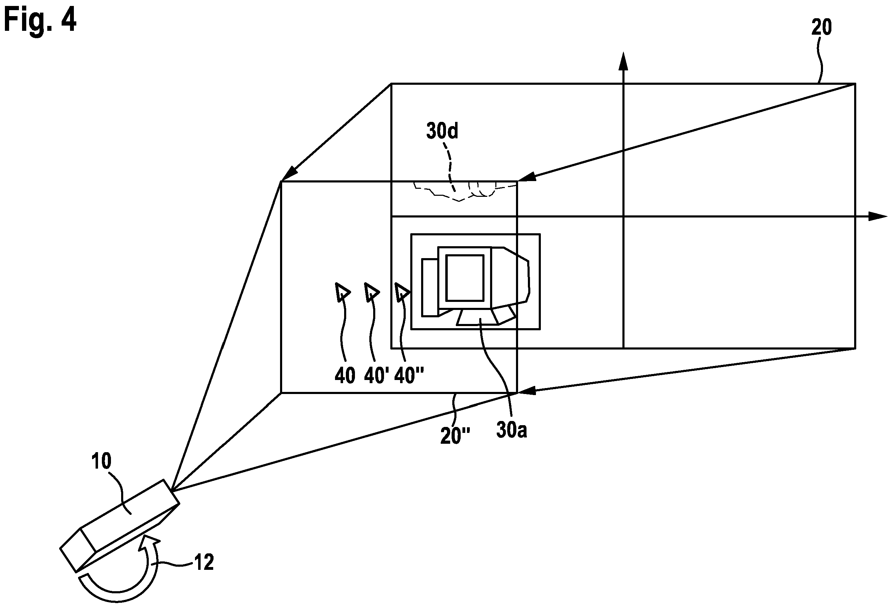

Figur 4 zeigt wiederum eine ähnliche Darstellung wie in Figur 3, d.h. die Projektionsvorrichtung 10 wird bewegt, was durch einen Pfeil 12 angedeutet ist. Die Bewegung der Projektionsvorrichtung 10 ist in Figur 4 allerdings derart, dass die Zeige-Einrichtung 40 außerhalb der Projektionsfläche 20 sein würde, und somit das Icon 30a nicht mehr als relevant auswählen würde. In diesem Fall wird der Bildinhalt des Icons 30a schrittweise, angedeutet durch Zeige-Einrichtungen 40' und 40", soweit verschoben, bis Zeige-Einrichtung 40" wieder Icon 30a als relevant auswählt.

Eine Änderung zum Beispiel der Lichtstärke kann durch ein Steuerungssignal, welches jeweils für jedes einzelne Video-Pixel bereitgestellt wird, erzielt werden,, wenn das jeweilige Steuerungssignal eine entsprechende Information überträgt, dass die Lichtstärke für jedes Pixel erhöht bzw. geändert werden soll.

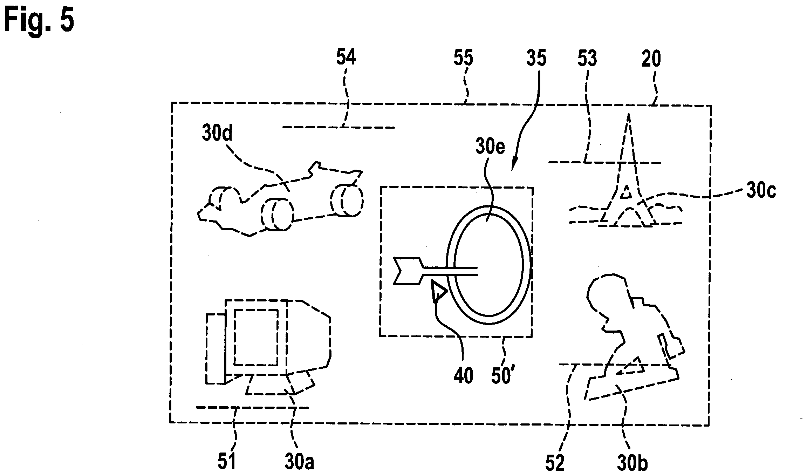

Figur 5 zeigt schließlich eine Projektionsfläche 20, wie es in Figur 2 der Fall ist, jedoch ohne die die Projektion erzeugende Projektionsvorrichtung. Es sind wiederum Icons 30a, 30b, 30c, 30d, und 30e erkennbar, wobei lediglich das Icon 30e als durch eine Zeige-Einrichtung 40 als relevant ausgewählte Teilfläche optisch hervorgehoben ist, während die anderen Icons jeweils durch einen punktierten Umriss als nicht-relevant dargestellt sind.

Das Icon 30e ist, wie in Figur 2, von einem (hier allerdings nicht dargestellten) Rahmen 35 umgeben, um das Icon 30e optisch hervorzuheben. Stattdessen ist die Teilfläche mit dem Icon 30e von einem punktierten Rand 50' umgeben, der mit dem Rahmen 35 zusammenfällt, wobei jeder Punkt des Randes 50' eine Position eines auf die Projektionsfläche auftreffenden Signales kennzeichnen soll. Diese Signale sind so beschaffen, dass sie vom Betrachter nicht wahrgenommen werden. Wenn sich ein Objekt im Strahlengang bzw. Projektionsweg eines oder mehrerer der Signale befindet, beispielsweise eine Hand oder ein Kopf, dann wird - aufgrund der Unterbrechung des Projektionsweges des oder der Signale, die von der Projektionsvorrichtung ausgehen-eine Detektion eines Objektes festgestellt und beispielsweise die Lichtstärke für die relevante Teilfläche reduziert, um so eine Gefährdung, zum Beispiel eines Auges, durch eine zu hohe Lichtstärke zu vermeiden. Eine Detektion eines Objektes kann zum Beispiel durch eine Time-of-Flight-Messung oder eine Phasenverschiebungsmethode festgestellt werden. Es sind aber auch andere entsprechende Methoden vorstellbar.

Wie in Figur 5 alternativ oder zusätzlich dargestellt ist, können entsprechende Test-Signale zum Detektieren eines Objektes auch an andere Stellen der Projektionsfläche 20 projiziert werden, wie zum Beispiel durch punktierte Linien 51, 52, 53 oder 54 dargestellt. Auch der Rand der gesamten Projektionsfläche 20 kann als Bereich für die Test-Signale genommen werden, wie durch eine punktierte Linie 55 dargestellt. Es ist aber jeder andere Bereich denkbar, der auch außerhalb der Projektionsfläche 20 liegen kann.

Abschließend sei noch bemerkt, dass auch der Abstand eines Objektes von der Projektionsvorrichtung mit berücksichtigt werden kann, d.h., dass ein relativ weit von der Projektionsvorrichtung entfernt befindliches Objekt nicht notwendigerweise eine Reduzierung einer Lichtstärke nach sich ziehen muss, wenn festgestellt wird, dass aufgrund der weiteren Entfernung von der Projektionsvorrichtung eine Gefährdung, z.B. eines angestrahlten Betrachters, eher ausgeschlossen ist.

## Patentansprüche

1. Verfahren zum Reduzieren einer Lichtstärke einer Projektionsvorrichtung (10), die folgenden Schritte umfassend:
- Projizieren von Information in Form einer visuellen Darstellung auf eine Gesamtfläche (20);
- Aussenden von zwischen mindestens 20 und höchstens 100 für einen Betrachter im Wesentlichen nicht wahrnehmbaren elektromagnetischen Signalen durch die Projektionsvorrichtung (10) auf die Gesamtfläche (20); wobei die elektromagnetischen Signale Lichtsignale sind, welche pulsförmig mit einer Pulslänge im Bereich von 0,2 ns bis 10 ns mit einer Frequenz von 100 bis 500 MHz ausgesendet werden;
- mit Hilfe der elektromagnetischen Signale Detektieren von Objekten, welche sich im Strahlengang zwischen Projektionsvorrichtung (10) und Gesamtfläche (20) befinden; und
- Reduzieren der Lichtstärke der Projektionsvorrichtung (10) solange ein Objekt im Strahlengang detektiert wird.

2. Projektionsvorrichtung, **dadurch gekennzeichnet, dass** die Projektionsvorrichtung (10) zum Durchführen des Verfahrens nach Anspruch 1 eingerichtet ist.

## Claims

1. Method for reducing a luminous intensity of a projection apparatus (10), comprising the steps of:
- projecting information in the form of a visual representation onto a total surface (20);
- emitting between at least 20 and at most 100 electromagnetic signals, which are substantially not perceivable by an observer, through the projection apparatus (10) onto the total surface (20);
wherein the electromagnetic signals are light signals that are emitted in pulse form having a pulse length ranging from 0.2 ns to 10 ns at a frequency of 100 to 500 MHz;
- detecting objects located in the beam path between the projection apparatus (10) and the total surface (20) using the electromagnetic signals; and
- reducing the luminous intensity of the projection apparatus (10) as long as an object is detected in the beam path.

2. Projection apparatus, **characterized in that** the projection apparatus (10) is set up for performing the method according to Claim 1.

## Revendications

1. Procédé pour réduire une intensité lumineuse d'un dispositif de projection (10), comprenant les étapes consistant à :
- projeter des informations sous la forme d'une représentation visuelle sur une surface totale (20) ;
- émettre entre au moins 20 et au plus 100 signaux électromagnétiques sensiblement non perceptibles par un observateur à travers le dispositif de projection (10) sur la surface totale (20) ; dans lequel les signaux électromagnétiques sont des signaux lumineux qui sont émis sous la forme d'impulsions ayant une longueur d'impulsion se situant dans la plage de 0,2 ns à 10 ns à une fréquence de 100 à 500 MHz ;
- détecter, à l'aide des signaux électromagnétiques, des objets qui se trouvent sur le chemin de faisceau entre le dispositif de projection (10) et la surface totale (20) ; et
- réduire l'intensité lumineuse du dispositif de projection (10) jusqu'à ce qu'un objet soit détecté sur le chemin de faisceau.

2. Dispositif de projection, **caractérisé en ce que** le dispositif de projection (10) est conçu pour mettre en oeuvre le procédé selon la revendication 1.
